(19)

Europäisches Patentamt
European Patent Office
Office européen des brevets

(11) **EP 4 215 769 A1**

(12) **EUROPÄISCHE PATENTANMELDUNG**

(43) Veröffentlichungstag:
**26.07.2023 Patentblatt 2023/30**

(21) Anmeldenummer: **22152733.6**

(22) Anmeldetag: **21.01.2022**

(51) Internationale Patentklassifikation (IPC):
*F16C 17/24* *(2006.01)* *F16C 19/52* *(2006.01)*
*F16C 35/02* *(2006.01)* *F16C 35/077* *(2006.01)*
*F16C 41/00* *(2006.01)* *F16F 15/00* *(2006.01)*
*F16F 15/02* *(2006.01)* *F16F 15/08* *(2006.01)*
*F16C 17/22* *(2006.01)* *F16C 25/04* *(2006.01)*
*F16C 25/08* *(2006.01)*

(52) Gemeinsame Patentklassifikation (CPC):
**F16C 17/24; F16C 17/02; F16C 27/02;**
**F16C 27/063; F16F 15/002; F16F 15/007;**
**F16F 15/02; F16F 15/08;** F16C 19/527;
F16C 27/04; F16C 27/066; F16C 2202/36;
F16C 2233/00; F16C 2380/26

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schuh, Carsten**
**85598 Baldham (DE)**

(74) Vertreter: **Siemens Patent Attorneys**
**Postfach 22 16 34**
**80506 München (DE)**

(54) **LAGERELEMENT, MASCHINE UND VERFAHREN ZUM STEUERN EINES LAGERELEMENTES**

(57) Die Erfindung betrifft ein Lagerelement (2) für eine rotierende Welle (4) umfassend einen Lagerring (6) und ein den Lagerring (6) rotationssymmetrisch umgebendes Dämpfungselement (8), wobei das Dämpfungselement (8) ein Gehäuse (10) aufweist, das wiederum einen mittels einer Spannvorrichtung (12) in axialer Richtung (14) mit einer Kraft (F) vorgespannten Spannrahmen (16) umfasst, wobei im Gehäuse (10) Scheiben (18) in gestapelter Form angeordnet sind, die über elastische Elemente (20) eine kraftschlüssige Wirkverbindung mit dem Gehäuse (10) eingehen und durch die Spannvorrichtung (12) axial vorgespannt sind, dadurch gekennzeichnet, dass ein Aktor (22) mit der Spannvorrichtung (12) in Wirkverbindung steht und mittels des Aktors (22) eine dynamische Veränderung der Vorspannung ($F_{dyn}$) der Spannvorrichtung erfolgt.

FIG 2

EP 4 215 769 A1

## Beschreibung

Bei rotierenden Maschinen, insbesondere elektrischen Maschinen, jedoch auch bei Hubkolbenmaschinen weisen die Rotoren bzw. Wellen eine dynamisch sich ändernde Relativbewegung in radialer und auch in axialer Richtung in Bezug auf die quasiruhenden Statoren bzw. auf das Gehäuse auf. Diese Relativbewegungen können dabei sowohl entlang der Rotorachsen als auch auf dem Rotor-Außenumfang unterschiedlich und sich dynamisch ändernd ausgebildet sein. Resonante dynamische Eigenschwingungen der Rotorachse können beispielsweise durch Toleranzen des Aufbaus von Rotorlager und Stator bzw. Gehäuse auftreten. Dabei kann es sich z. B. um geometrische Toleranzen sowie Unwuchten, Lagerspiele oder radial unterschiedliche thermische Ausdehnungskoeffizienten sowie Exzentrizitäten oder Steifigkeitsunterschiede handeln. Ferner können elektromagnetische Felder, die in radialer Richtung unterschiedlich ausgeprägt sind, sowie Induktivitäten, die beispielsweise durch Materialunterschiede und/oder Fluktuationen im elektrischen Erregerstrom und in dem induzierten Wirbelstrom auftreten, sowie unterschiedliche lokale Erwärmungen des Gesamtaufbaus im Betrieb zu den resonanten dynamischen Eigenschwingungen beitragen. Diese Eigenschwingungen können zudem zu jedem spezifischen Ansteuerungs- und Last- bzw. Betriebsfall der elektrischen Maschine unterschiedlich sein. Die so erzeugten dynamischen Relativbewegungen der Rotorachse wirken über das Rotorlager und die Lagerbuchse in das Lagerschild des Motorengehäuses der elektrischen Maschine.

Aufgrund der beschriebenen mechanischen Wirkungskette kommt es bei einer angeregten resonanten Eigenschwingung der Rotorachse zu mechanischen Schwingungen im Gehäuse und Gehäuselager, welche sich dann als Vibrationen, z. B. in Form von Körperschall als auch durch weitere akustische Phänomene bemerkbar machen.

Bisher wurden insbesondere in elektrischen Motoren zur Reduzierung von Motorgeräuschen und Schwingungen zwei verschiedene Maßnahmen umgesetzt, die für sich genommen aber nicht zielführend sind, da sie im Allgemeinen die Lagersteifigkeit signifikant reduzieren und damit höhere relative Spaltmaße bedingen. Zum Beispiel kann als bekannte Maßnahme zur Unterbindung dieser Motorgeräusche das Anbringen träger Massen bzw. die Überdimensionierung von mechanischen Komponenten zur Verschiebung der Resonanzfrequenz in unkritische Bereiche, insbesondere weit entfernt vom Bereich der Anwendungsdrehzahlen bewirkt werden. Ferner können z. B. Gummiringe oder O-Ringe im Lager eingebaut werden. Auch das Anbringen passiver Dämpfungselemente für bestimmte Resonanzschwingungsbereiche sowohl am Rotor als auch am Motorgehäuse bzw. an den Auflagern des Gehäuses wird angewandt. Alle diese genannten bereits bekannten Maßnahmen führen zu der bereits erwähnten signifikanten und nachteiligen Reduktion der Lagersteifigkeit und damit zu höheren Spaltmaßen.

Die Aufgabe der Erfindung besteht darin, ein Lagerelement sowie eine Maschine und ein Verfahren zum Steuern eines Lagerelementes bereitzustellen, welche die beschriebenen Nachteile reduzieren.

Die Lösung der Aufgabe besteht in einem Lagerelement mit den Merkmalen des Patentanspruchs 1 sowie in einer Maschine mit den Merkmalen des Patentanspruchs 12 und in einem Verfahren zum Steuern eines Lagerelementes mit den Merkmalen des Patentanspruchs 14.

Das Lagerelement für eine rotierende Welle umfasst dabei einen Lagerring und ein den Lagerring rotationssymmetrisch umgebendes Dämpfungselement. Das Dämpfungselement weist dabei ein Gehäuse auf, das wiederum einen mittels einer Spannvorrichtung in axialer Richtung mit einer Kraft F vorgespannten Spannrahmen aufweist. Innerhalb des Gehäuses sind dabei Scheiben in gestapelter Form angeordnet, die über elastische Elemente eine kraftschlüssige Wirkverbindung mit dem Gehäuse einnehmen und durch die Spannvorrichtung axial vorgespannt sind. Die Erfindung zeichnet sich dadurch aus, dass ein Aktor vorgesehen ist, der mit der Spannvorrichtung in einer Wirkverbindung steht, wobei mittels des Aktors eine dynamische Veränderung der Vorspannung $F_{dyn}$ der Spannvorrichtung erfolgt.

Die radial übereinander gestapelten und zueinander gleitend angeordneten Scheiben dienen dabei zur Dämpfung von radialen Schwingungen der Rotorwelle. Der Vorteil der beschriebenen Erfindung besteht darin, dass durch das beschriebene Lagerelement in seiner Konstruktion und der gegebenen Vorspannung nicht nur ein bestimmter Frequenzbereich für resonanten Schwingungen abgedeckt werden kann, sondern dass mittels des Aktors dynamisch auf auftretende Schwingungsspektren reagiert werden kann und Schwingungen im Lagerelement bereits während ihrer Entstehungsphase durch Veränderung der Dämpfungseigenschaften mittels des Aktors und der Spannvorrichtung eliminierbar sind.

Bei der beschriebenen Lösung handelt es sich somit um eine Vorrichtung, die dazu geeignet ist, dynamisch auftretende Schwingungen und Resonanzen zu eliminieren. Dadurch ist es weiterhin möglich, dass eine hohe Lagersteifigkeit bei geringen Spaltmaßen erzielt werden kann. Ferner besteht ein Vorteil der Erfindung darin, dass das Lagerelement als Standardelement für verschiedene Maschinen unterschiedlicher Bauart eingesetzt werden kann, da durch die dynamische Reaktion auf Schwingungen eine große Anzahl von Maschinengeometrien und - typen abgedeckt werden kann. Die mit dem beschriebenen Lagerelement ausgestatteten Maschinen weisen dabei ein deutlich geringeres Geräusch- und Schwingungsniveau auf, was in verschiedenen Anwendungsbereichen, wie beispielsweise in der elektrischen Mobilität, einen Komfortzugewinn darstellt.

Die beschriebenen Maschinen können dadurch auch leichter, kleiner und weniger steif konstruiert werden, ohne dabei eine höhere Geräuschkulisse zu erzeugen. Besonders bei Einsatzgebieten, in denen kleine Maschinen erforderlich sind, wie beispielsweise Exoskelette, Leichtbauroboter oder Drohnen ist ein beschriebenes Lagerelement anwendbar.

In einer vorteilhaften Ausgestaltungsform der Erfindung sind die Scheiben axial an Ringelementen befestigt, die sich ebenfalls im Gehäuse befinden oder einen Teil des Gehäuses darstellen. Diese Ringelemente mit den daran befestigten Scheiben sind dann wiederum in einer vorteilhaften Ausgestaltungsform durch die elastischen Elemente voneinander getrennt. D. h., dass die elastischen Elemente, die in axialer Richtung wirken, nicht notwendigerweise zwischen den Scheiben, sondern auch zwischen den Ringelementen, mit denen die Scheiben fest verbunden sind, angebracht sein können. Scheiben und Ringelemente können dabei auch als integrale Bauteile ausgestaltet sein.

Es ist auch zweckmäßig, dass die Scheiben alternierend an einem radial äußeren Ringelement und einem radial inneren Ringelement befestigt sind. Die radial inneren und die radial äußeren Ringelemente, die wiederum bevorzugt durch die elastischen Elemente voneinander getrennt sind, können dann aufgestapelt ebenfalls in Form eines Zylinders ausgestaltet sein, in dem die Scheiben angeordnet sind. Die Scheiben wiederum sind dabei bevorzugt durch ein Reibelement voneinander in ihrer Stapelfolge getrennt. Diese Reibelemente können beispielsweise in Form von Elastomerfolien ausgestaltet sein, grundsätzlich könnte auch ein Fluid im Inneren des Gehäuses vorliegen, und als Reibelement zwischen den einzelnen Scheiben fungieren. Hierdurch wir der Verschleiß zwischen den Scheiben reduziert.

Der Aktor des Lagerelementes, der zur Einbringung einer dynamischen Veränderung der Vorspannung dient, kann in einer bevorzugten Ausgestaltungsform ein piezoelektrischer Aktor sein. Grundsätzlich sind aber auch elektrostriktive, magnetostriktive oder elektromagnetische Aktoren zweckmäßig.

Das Lagerelement weist einen Lagerring auf, der direkt um die rotierende Welle angeordnet ist. Dieser Lagerring ist das eigentliche Lager der rotierenden Welle und kann in üblicher Weise bevorzugt durch ein Gleitlager, ein Wälzlager oder ein Kugellager ausgestaltet sein.

Der Aktor weist dabei in einer vorteilhaften Ausgestaltungsform der Erfindung eine Informationsverbindung zu einer Recheneinheit auf, die über die Informationsverbindung Steuersignale an den Aktor übermittelt, sodass die durch die Steuersignale hervorgerufenen Aktorbewegungen die dynamische Veränderung der Vorspannung und somit die Dämpfung des Lagerelementes vornehmen können.

In einer weiteren vorteilhaften Ausgestaltungsform der Erfindung sind Sensoren zur Messung von physikalischen Größen am Lagerelement oder an der rotierenden Welle vorgesehen, die mit der Recheneinheit in einer Informationsverbindung stehen. Entsprechende Sensoren können dabei Beschleunigungssensoren, Kraftsensoren, Drehwinkelmesseinrichtungen und somit Drehgeschwindigkeitsmesssensoren sowie Temperatursensoren sein.

In einer weiteren vorteilhaften Ausgestaltungsform der Erfindung ist die Spannvorrichtung in einem radial äußeren Bereich des Lagerelementes angeordnet und sie wirkt in axialer Richtung. Durch diese Anordnung der Spannvorrichtung kann eine bessere dynamische Wirkung des Aktors erzeugt werden, wobei die Anordnung abseits der Rotorwelle bezüglich des Bauraums geeignet ist.

Ein weiterer Bestandteil der Erfindung ist eine Maschine mit einer rotierenden Welle, die ein Lagerelement nach einem der vorhergehenden Ansprüche umfasst. Bei dieser Maschine handelt es sich bevorzugt um eine elektrische Maschine wie einen Elektromotor oder einen Generator.

Ein weiterer Bestandteil der Erfindung ist ein Verfahren zum Steuern eines Lagerelementes zur Dämpfung einer rotierenden Welle umfassend folgende Schritte:

- Aufnehmen von physikalischen Daten am Lagerelement,

- Übertragen und Verarbeitung der physikalischen Daten mittels eines Algorithmus auf einer Recheneinheit und Berechnung von Steuersignalen,

- Senden der Steuersignale an einen am Lagerelement angebrachten Aktor und

- Erzeugen einer durch die Steuersignale bewirkte Bewegung des Aktors, die das Dämpfungsverhalten des Lagerelementes beeinflusst.

In einer bevorzugten Ausgestaltungsform der Erfindung erfolgen die Berechnungen mittels der Recheneinheit und die Bewegung des Aktors in Echtzeit.

Die Vorteile, die das beschriebene Verfahren gegenüber dem Stand der Technik aufweist, sind bereits bezüglich des Lagerelementes als Vorrichtung beschrieben. Insbesondere kann durch die Bewegung des Aktors die Vorspannung am Lagerelement so beeinflusst werden, dass sich aufbauende Resonanzen bereits während ihrer Entstehungsphase kompensiert werden können und ihnen entgegengewirkt werden kann. Dies führt zu Geräuschreduktionen und höheren Eigenfrequenzen der Maschine.

Der Begriff Echtzeit (englisch real-time) charakterisiert den Betrieb informationstechnischer Systeme, die bestimmte Ergebnisse zuverlässig innerhalb einer vorbestimmten Zeitspanne, zum Beispiel in einem festen Zeitraster, liefern können. Die Definition ist in DIN ISO/IEC 2382 (Informationsverarbeitung), Teil 9 (Verarbeitungsabläufe) angegeben: Unter Echtzeit versteht man den Betrieb eines Rechensystems, bei dem Programme zur Verarbeitung anfallender Daten ständig betriebsbereit sind, derart, dass die Verarbeitungsergebnisse innerhalb einer vorgegebenen Zeitspanne verfügbar sind. Die Daten können je nach Anwendungsfall nach einer zeitlich zufälligen Verteilung oder zu vorherbestimmten Zeitpunkten anfallen. Durch die Hardware und Software muss sichergestellt werden, dass keine Verzögerungen auftreten, welche die Einhaltung dieser Bedingung verhindern könnten. Die Verarbeitung der Daten muss dabei nicht besonders schnell erfolgen, sie muss nur garantiert schnell genug für die jeweilige Anwendung erfolgen.

Weitere Ausgestaltungsformen und weitere Merkmale der Erfindung werden anhand der folgenden Figuren näher erläutert. Dabei handelt es sich um rein schematische Ausgestaltungsformen, die keine Einschränkung des Schutzbereichs darstellen.

Dabei zeigen:

Figur 1 eine dreidimensionale Explosionszeichnung einer elektrischen Maschine am Beispiel eines Elektromotors,

Figur 2 eine Querschnittsdarstellung, schematisch vereinfacht, durch ein Lagerelement mit Spannvorrichtung und

Figur 3 ein Fließdiagramm für den Ablauf eines Verfahrens zur Dämpfung eines Lagerelementes.

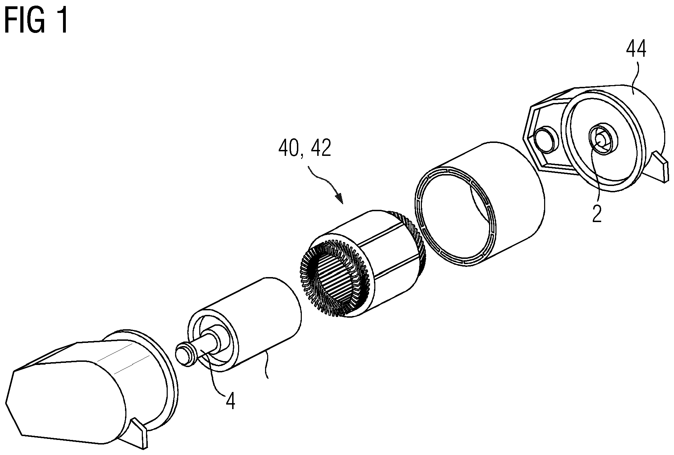

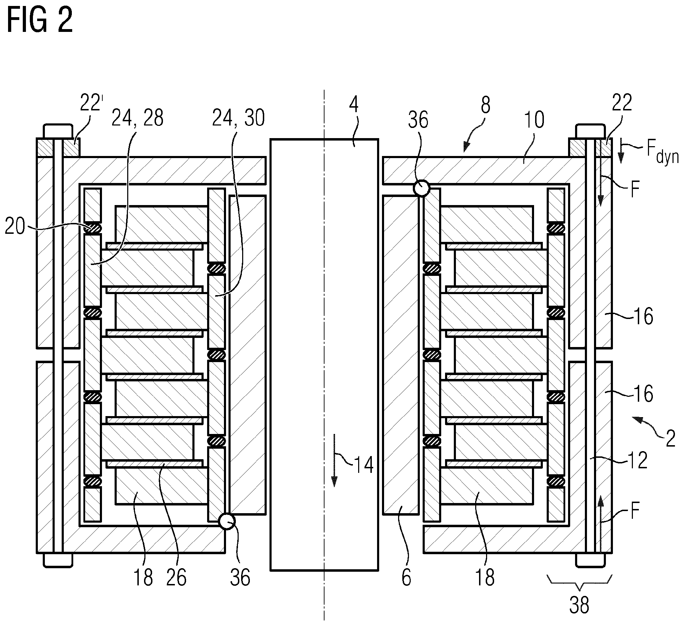

In Figur 1 ist schematisch eine dreidimensionale Explosionsdarstellung einer Maschine 40 in Form eines Elektromotors 42 gegeben. Die Maschine 40 weist dabei ein Lagerschild 44 auf, in dem ein Lagerelement 2 eingesetzt ist. Grundsätzlich kann das beschriebene Lagerelement auch in einem Hubkolbenmotor vorteilhaft Anwendung finden. In dem Lagerelement 2 ist eine rotierende Welle 4 gelagert. Die Figur 1 dient insbesondere dazu, die Anordnung der in Figur 2 beschriebenen Querschnittsdarstellung des Lagerelementes 2 in der elektrischen Maschine 42 zu veranschaulichen.

Bei der Darstellung der Figur 2 handelt es sich um eine sehr schematische Darstellung des Lagerelementes 2 in seinem Querschnitt, wobei ebenfalls eine rotierende Welle 4 im Zentrum des Lagerelementes 2 rotationssymmetrisch angeordnet ist, wobei die rotierende Welle 4 nicht Bestandteil des Lagerelementes 2 an sich ist.

Das Lagerelement 2 weist dabei einen Lagerring 6 auf, der hier in Form eines Gleitlagers ausgestaltet ist. Der Lagerring 6 umgibt dabei die rotierende Welle 4 und stellt das eigentliche Lager der Welle 4 dar. Der Lagerring 6 ist wie beschrieben in dem Lagerelement 2 angeordnet, das neben dem Lagerring 6 ein Dämpfungselement 8 aufweist. Das Dämpfungselement 8 wiederum umfasst ein Gehäuse 10, wobei der Lagerring 6 in dieser Ausgestaltungsform eine innere Gehäusewand des Dämpfungselementes 8 darstellt. Ferner umfasst das Dämpfungselement 8 eine Spannvorrichtung 12, die in einem äußeren Bereich 38 des Lagerelementes 2, also auf der der Welle 4 abgewandten Seite des Lagerelementes 2 angeordnet ist. Bei der Spannvorrichtung handelt es sich in dieser Ausgestaltungsform um eine Verschraubung, wobei mehrere Verschraubungen in radialer Umfangsrichtung um das Lagerelement 2 herum angeordnet sein können. Beispielsweise können in einem Bogensegment von jeweils 30° eine Verschraubung als Spannvorrichtung 12 vorgesehen sein. Hierbei handelt es sich in Figur 2 um eine rein schematische Darstellung der Spannvorrichtung, die auch durch eine komplexere Ausgestaltungsform ausgeführt sein kann.

Die Spannvorrichtung 12 ist dabei so ausgestaltet, dass sie einen Spannrahmen 16 in axiale Richtung 14 vorspannt. Hierbei wird durch die Spannvorrichtung 12 die Kraft F auf das Gehäuse 10 bzw. auf den Spannrahmen 16, der Teil des Gehäuses 10 ist, aufgebracht.

Im Inneren des Gehäuses 10 sind Scheiben 18 angeordnet, die über eine mechanische Wirkverbindung durch elastische Elemente 20 voneinander getrennt sind. Dabei sind die Scheiben 18 in der Form ausgestaltet, dass sie alternierend jeweils mit einem Ringelement 24 verbunden sind, wobei man unter radialen äußeren Ringelementen 28 und radialen inneren Ringelementen 30 unterscheidet. Die Scheiben 18 und die damit verbundenen Ringelemente 24 bzw. 28 und 30 sind dabei gestapelt ausgestaltet. Zwischen den jeweils radial äußeren Ringelementen 28 und den radial inneren Ringelementen 30 sind die elastischen Elemente 20 angeordnet, auf die über die mechanische Wirkverbindung ebenfalls die Kraft F der Spannvorrichtung 12 wirkt. Es ist dabei vorteilhaft, dass zwischen den Scheiben 18 Reibelemente 26 beispielsweise in Form von Elastomerfolien angeordnet sind. Die Scheiben 18 sind somit form- und kraftschlüssig miteinander verbunden und es wird zwischen ihnen ein Reibschluss hergestellt. Sie bewirken so eine Dämpfung von radial nach innen und radial nach außen gerichteten Schwingungen, die insbesondere durch die Welle 4 induziert werden. Die Reibelemente 26 dienen dazu, den direkten Reibschluss zwischen den Scheiben 18 zur Vermeidung von übermäßigem Verschleiß zu verhindern.

Durch die Vorspannung in der Spannvorrichtung 12 über die Kraft F kann eine bestimmte Kraft-Weg-Charakteristik voreingestellt werden, die die grundlegenden Dämpfungseigenschaften des Lagerelementes 2 definiert. Um aber eine hochdynamische Anpassung der Dämpfung zu realisieren, werden in die Spannvorrichtung 12 mindestens ein Aktor 22, bevorzugt mehrere Aktoren 22 eingebracht. Bevorzugt weist jede Verschraubung der Spannvorrichtung 12 in einem Bogensegment jeweils einen Aktor 22 auf, über den dynamisch die Kraft $F_{dyn}$ aufgebracht wird. Die Kraft, die somit auf das Lagerelement 2 über die Spannvorrichtung 12 wirkt, ergibt sich somit als

$$F_{Gesamt} = F + F_{dyn},$$

wobei $F_{dyn}$ dabei positiv oder negativ sein kann und über den Aktor 22 bzw. die Aktoren 22 in das Lagerelement 2 eingebracht wird.

Dabei können verschiedene Aktoren 22 bzw. 22' an bestimmten Orten auf der Spannvorrichtung 12 unterschiedliche Kräfte $F_{dyn}$ induzieren, um ein dynamisches Dämpfungsverhalten des Lagerelementes 2 zu gewährleisten.

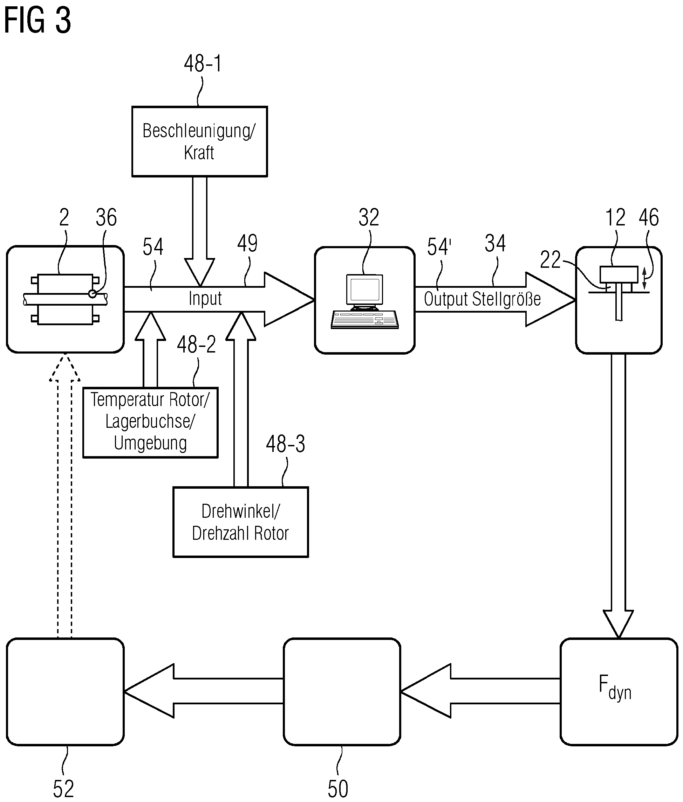

Die Wirkweise des Aktors 22 auf das Dämpfungsverhalten des Lagerelementes 2 wird schematisch an dem Fließdiagramm nach Figur 3 beschrieben, in dem ein Verfahren zum Steuern des Lagerelementes 2 und zur Dämpfung der rotierenden Welle 4 beschrieben ist. Ausgehend von dem gemäß Figur 2 beschriebenen Dämpfungselement 8 werden über Sensoren 36, die an verschiedenen Stellen des Dämpfungselementes 8 bzw. an der rotierenden Welle 4 und/oder auch an anderen Stellen in oder an der elektrischen Maschine angeordnet sind, physikalische Daten 48 ermittelt. Physikalische Daten, die über die Sensoren 36 ermittelt werden, sind beispielsweise die Beschleunigung der Welle 4, die Kraft, die auf den Lagerring 6 wirkt, die Temperatur an verschiedenen Stellen bzw. der Drehwinkel der Welle 4, über die wiederum durch eine Zeitmessung die Drehzahl der Welle 4 ermittelt werden kann. Diese physikalischen Daten 48 sind rein schematisch in Figur 3 mit 48-1 bis 48-3 versehen. Die physikalischen Daten 48 werden dabei in Sensorsignale 49, die in der Regel in Form von elektrischen Impulsen erfolgen, umgewandelt und über eine Informationsverbindung 54 an eine Recheneinheit 32 weitergeleitet. Die Recheneinheit 32 kann dabei ein lokal an der Maschine angeordneter Computer, ein Edge Computer mit Verbindung zu einer Cloud, jedoch auch ein Cloud-Rechner sein, wobei die Informationsverbindung 54 jeweils über eine Funkverbindung wie beispielsweise WLAN oder über eine kabelgestützte Verbindung erfolgen kann.

In der Recheneinheit 32 werden dann in Echtzeit mittels eines Algorithmus aus den Informationen der physikalischen Daten 48 Steuersignale für die Aktoren 22 errechnet. Diese Steuersignale 34 werden wiederum über eine Informationsverbindung 54' an die Aktoren 22 weitergeleitet. Die Aktoren 22 nehmen die Steuersignale 34 auf und üben in sehr kurzer Zeit die Kraft $F_{dyn}$ aus, die wie bereits erwähnt positiv oder negativ sein kann und somit bezüglich der Spannvorrichtung 12 eine Vergrößerung oder eine Verkleinerung der Kraft F bewirken kann. Durch diese Veränderung der Kraft F bzw. der Gesamtkraft $F_{Ge-samt}$ wird eine Änderung des Dämpfungsverhaltens des Lagerelementes 2, was durch den Kasten 50 veranschaulicht ist, bewirkt. Hierbei ist wichtig, dass die Datenverarbeitung über die Recheneinheit 32 und die anschließende Weitergabe der Steuersignale 34 an die Aktoren 22 in einer sehr geringen Zeitspanne erfolgt, um einem Schwingungsverhalten, das durch die rotierende Welle 4 induziert wird, sehr schnell entgegenzuwirken, sodass eine Geräuschentwicklung am Lager bzw. am Gehäuse der Maschine 40 direkt in Keim erstickt werden kann.

Die auf diese Weise dynamisch angepasste Dämpfung des Lagerelementes 2 ist als Resultat der Dämpfung mit dem Kasten 52 im Diagramm gemäß Figur 3 veranschaulicht. Gleichzeitig werden mit der neuen Situation, die jetzt eingetreten ist, weiter alle Daten über die Sensoren 36 aufgenommen und wiederum erneut als Sensorsignale 49 der Recheneinheit 32 zugeführt, um weitere Maßnahmen und Einflussnahme der Aktoren auf das Dämpfungsverhalten des Lagerelementes 2 auszuüben. Es handelt sich somit um eine dynamische Einflussaufnahme auf das Dämpfungsverhalten in einem sogenannten Closed-Loop-Prozess (Regelung in Echtzeit).

Bezugszeichenliste

| | |
|---|---|
| 2 | Lagerelement |
| 4 | rotierende Welle |
| 6 | Lagerring |
| 8 | Dämpfungselement |
| 10 | Gehäuse |
| 12 | Spannvorrichtung |
| 14 | axiale Richtung |
| 16 | Spannrahmen |
| 18 | Scheiben |
| 20 | elastische Elemente |
| 22 | Aktor |
| 24 | Ringelement |
| 26 | Reibelement |
| 28 | radial äußeres Ringelement |
| 30 | radial inneres Ringelement |
| 32 | Recheneinheit |
| 34 | Steuersignal |
| 36 | Sensoren |
| 38 | radial äußerer Bereich |
| 40 | Maschine |
| 42 | elektrische Maschine |
| 44 | Lagerschild |
| 46 | Bewegung |
| F | Kraft Vorspannung |
| $F_{dyn}$ | dynamische Änderung F |
| 48 | physikalische Daten |
| 49 | Sensorsignale |
| 50 | Änderung Dämpfungsverhalten Lagerelement |
| 52 | Resultat Dämpfung Lagerelement |
| 54 | Informationsverbindung |

**Patentansprüche**

**1.** Lagerelement (2) für eine rotierende Welle (4) umfassend einen Lagerring (6) und ein den Lagerring (6) rotationssymmetrisch umgebendes Dämpfungselement (8), wobei das Dämpfungselement (8) ein Gehäuse (10) aufweist, das wiederum einen mittels einer Spannvorrichtung (12) in axialer Richtung (14) mit einer Kraft (F) vorgespannten Spannrahmen (16) umfasst, wobei im Gehäuse (10) Scheiben (18) in gestapelter Form angeordnet sind, die über elastische Elemente (20) eine kraftschlüssige Wirkverbindung mit dem Gehäuse (10) eingehen und durch die Spannvorrichtung (12) axial vorgespannt sind, **dadurch gekennzeichnet, dass** ein Aktor (22) mit der Spannvorrichtung (12) in Wirkverbindung steht und mittels des Aktors (22) eine dynamische Veränderung der Vorspannung ($F_{dyn}$) der Spannvorrichtung erfolgt.

2. Lagerelement nach Anspruch 1, **dadurch gekennzeichnet, dass** die Scheiben (18) axial an Ringelementen (24) befestigt sind.

3. Lagerelement nach Anspruch 2, **dadurch gekennzeichnet, dass** die Ringelemente (24) durch die elastischen Elemente (20) voneinander getrennt sind.

4. Lagerelement nach Anspruch 2 oder 3, **dadurch gekennzeichnet, dass** die Scheiben (18) alternierend an einem radial äußeren Ringelement (28) und an einem radial inneren Ringelement (30) befestigt sind.

5. Lagerelement nach einem der Ansprüche 2 bis 4, **dadurch gekennzeichnet, dass** die Ringelemente (24), (28), (30) in einer mechanischen Wirkverbindung zum Spannrahmen (16) stehen.

6. Lagerelement nach einem der vorhergehenden Ansprüche, **dadurch gekennzeichnet, dass** zwischen den gestapelten Scheiben (18) ein Reibelement (26) angeordnet ist.

7. Lagerelement nach einem der vorhergehenden Ansprüche, **dadurch gekennzeichnet, dass** der Aktor (22) ein piezoelektrischer Aktor (22), ein elektrostriktiver Aktor (22), ein magnetostriktiver Aktor (22) oder ein elektromagnetischer Aktor (22) ist.

8. Lagerelement nach einem der vorhergehenden Ansprüche, **dadurch gekennzeichnet, dass** der Lagerring (6) ein Gleitlager oder ein Wälzlager oder ein Kugellager umfasst.

9. Lagerelement nach einem der vorhergehenden Ansprüche, **dadurch gekennzeichnet, dass** der Aktor (22) mit einer Recheneinheit (32) zur Übermittlung von Steuersignalen (34) in Informationsverbindung (54') steht.

10. Lagerelement nach Anspruch 9, **dadurch gekennzeichnet, dass** Sensoren (36) zur Messung von physikalischen Größen vorgesehen sind, die mit der Recheneinheit (32) in einer Informationsverbindung (54) stehen.

11. Lagerelement nach einem der vorhergehenden Ansprüche, **dadurch gekennzeichnet, dass** die Spannvorrichtung (12) in einem radial äußeren Bereich (38) des Lagerelementes (2) angeordnet ist und in axialer Richtung (14) wirkt.

12. Maschine mit einer rotierenden Welle umfassend ein Lagerelement (2) nach einem der Ansprüche 1 bis 11.

13. Maschine nach Anspruch 12, **dadurch gekennzeichnet, dass** die Maschine (40) eine elektrische Maschine (42) ist.

14. Verfahren zum Steuern eines Lagerelementes (2) zur Dämpfung einer rotierenden Welle (4) umfassend folgende Schritt:

   - Aufnehmen von physikalischen Daten (48-1, 48-2, 48-3) am Lagerelement (2) oder an einer Maschine (40),
   - Übertragen und Verarbeitung der physikalischen Daten (48-1, 48-2, 48-3) mittels eines Algorithmus auf einer Recheneinheit (32) und Berechnung von Steuersignalen (34),
   - Senden der Steuersignale (34) an einen am Lagerelement (2) angebracht Aktor (22) und
   - Erzeugen einer durch die Steuersignale (34) bewirkten Bewegung (46) des Aktors (22), die das Dämpfungsverhalten des Lagerelements (2) beeinflusst.

15. Verfahren nach Anspruch 14, **dadurch gekennzeichnet, dass** die Berechnungen mittels der Recheneinheit (32) und die Bewegung (46) des Aktors (22) in Echtzeit erfolgen.

FIG 1

44

40, 42

2

4

FIG 2

# FIG 3

48-1

Beschleunigung/
Kraft

2    36        54         49
Input

Temperatur Rotor/
Lagerbuchse/
Umgebung
48-2

48-3

Drehwinkel/
Drehzahl Rotor

32        54'    34        12   46
22
Output Stellgröße

$F_{dyn}$

52                    50

Europäisches
Patentamt

European
Patent Office

Office européen
des brevets

**EUROPÄISCHER RECHERCHENBERICHT**

Nummer der Anmeldung

EP 22 15 2733

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/364036 A1 (ALKHATEEB EYAD MOHAMMAD [SA]) 25. November 2021 (2021-11-25) | 14,15 | INV.<br>F16C17/24 |
| A | * Abbildungen 1, 11 * | 1-13 | F16C19/52<br>F16C35/02 |
| A | CN 103 370 553 A (OERLIKON LEYBOLD VACUUM GMBH) 23. Oktober 2013 (2013-10-23)<br>* Abbildung 1 * | 1-15 | F16C35/077<br>F16C41/00<br>F16F15/00<br>F16F15/02 |
| A | US 2019/344617 A1 (FALOSSI MARCO [IT]) 14. November 2019 (2019-11-14)<br>* Abbildung 2 * | 1-15 | F16F15/08<br>F16C17/22<br>F16C25/04<br>F16C25/08 |
| A | DE 10 2014 210600 A1 (SIEMENS AG [DE]) 17. Dezember 2015 (2015-12-17)<br>* Abbildung 2 * | 1-15 | |

RECHERCHIERTE
SACHGEBIETE (IPC)

F16C
F16F

Der vorliegende Recherchenbericht wurde für alle Patentansprüche erstellt

| Recherchenort | Abschlußdatum der Recherche | Prüfer |
|---|---|---|
| Den Haag | 21. Juni 2022 | Frechard, Fabrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 2733

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-2022

| Im Recherchenbericht angeführtes Patentdokument | Datum der Veröffentlichung | Mitglied(er) der Patentfamilie | Datum der Veröffentlichung |
|---|---|---|---|
| US 2021364036 A1 | 25-11-2021 | US 2021364036 A1<br>WO 2021236132 A1 | 25-11-2021<br>25-11-2021 |
| CN 103370553 A | 23-10-2013 | CN 103370553 A<br>DE 202011002794 U1<br>EP 2676043 A1<br>JP 2014506981 A<br>WO 2012110384 A1 | 23-10-2013<br>06-06-2012<br>25-12-2013<br>20-03-2014<br>23-08-2012 |
| US 2019344617 A1 | 14-11-2019 | CN 110466286 A<br>DE 102019206294 A1<br>US 2019344617 A1 | 19-11-2019<br>14-11-2019<br>14-11-2019 |
| DE 102014210600 A1 | 17-12-2015 | DE 102014210600 A1<br>WO 2015185293 A1 | 17-12-2015<br>10-12-2015 |

EPO FORM P0461

Für nähere Einzelheiten zu diesem Anhang : siehe Amtsblatt des Europäischen Patentamts, Nr.12/82